(19) Europäisches Patentamt
European Patent Office
Office européen des brevets

(11) Publication number: 0 246 331 A1

(12) **EUROPEAN PATENT APPLICATION**

published in accordance with Art. 158(3) EPC

(21) Application number: 86906469.1

(22) Date of filing: 11.11.86

Data of the international application taken as a basis:

(86) International application number: PCT/JP86/00573

(87) International publication number: WO87/02865 (21.05.87 87/11)

(51) Int.Cl.[3]: A 01 N 53/00
A 01 N 47/34, A 01 N 37/34

(30) Priority: 11.11.85 JP 252142/85

(43) Date of publication of application: 25.11.87 Bulletin 87/48

(84) Designated Contracting States: AT BE CH DE FR GB IT LI LU NL SE

(71) Applicant: NIPPON KAYAKU KABUSHIKI KAISHA
11-2, Fujimi 1-chome Chiyoda-ku
Tokyo 102(JP)

(72) Inventor: TANABE, Satoshi
606, Koshikiya
Ageo-shi Saitama 362(JP)

(72) Inventor: HAYAOKA, Tatsumi
4255-2, Hirakata
Ageo-shi Saitama 362(JP)

(72) Inventor: MASUI, Akio
1-14, Minaminakano
Omiya-shi Saitama 330(JP)

(74) Representative: Goldin, Douglas Michael et al,
J.A. KEMP & CO. 14, South Square Gray's Inn
London WC1R 5EU(GB)

(54) **INSECTICIDAL COMPOSITIONS.**

(57) An insecticidal composition prepared by mixing a pyrethroid insecticide with N-(4-bromo-2-fluoro-5-trifluoromethylphenyl)-N'-(2,6-difluorobenzol)-urea.

EP 0 246 331 A1

SPECIFICATION

# INSECTICIDAL COMPOSITIONS

## Technical Field

The insecticidal compositions of this invention can be applied as insecticides in paddy fields, upland fields, orchards, etc.

## Background Art

For controlling agriculturally or horticulturally injurious insects, forest injurious insects or insanitary insects, many pyrethroid compounds have heretofore been used. Further, particularly for controlling injurious insects for agriculture and horticulture, benzoylphenylurea compounds have recently come to be used.

However, there has recently been reported the appearance of injurious insects having a lowered sensitivity to the pyrethroid compounds. On the other hand, the benzoylphenylurea compounds are different substances for controlling the growth of insects, exhibit an excellent insecticidal effect when used for treating agriculturally or horticulturally injurious insects in their larval stage in which ingestion is vigorous, and are agents excellent in effect retention, but they are disadvantageous in that no immediate

insecticidal effect can be expected.

Technical Problems

The present inventors have found that when a pyrethroid compound is mixed with N-(4-bromo-2-fluoro-5-trifluoromethylphenyl)-N'-(2,6-difluorobenzoyl)urea

( 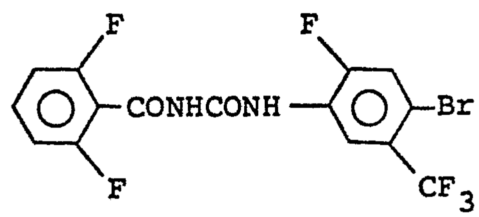 : Compound A) ,

the resulting mixture has insecticidal effect on insecticide-resistant injurious insects, immediate effect or durable insecticidal effect all unexpectable from the effects of each agent alone, namely, a marked synergistic effect which is not merely the sum of characteristic properties of the individual agents.

As the pyrethroid compound used in this invention, there can be exemplified, for example, α-cyano-3-phenoxybenzyl-1-(p-ethoxyphenyl)-2,2-dichlorocyclopropane carboxylate (Cycloprothrin); (RS)-α-cyano-3-phenoxybenzyl (IRS)cis,trans-3-(2,2-dichlorovinyl)-2,2-dimethylcyclopropane-carboxylate (Cypermethrin); α-cyano-3-phenoxybenzyl α-isopropyl-4-chlorophenylacetate (Fenvalerate); α-cyano-3-phenoxybenzyl (IRS)-2-(2-chloro-4-trifluoromethylphenyl)amino-3-methylbutyrate (Fluvalinate); α-cyano-3-phenoxybenzyl (IRS)cis-3-(2,2-dibromovinyl)-2,2-dimethylcyclopropanecarboxylate (Deltamethrin); 3-phenoxybenzyl d,ℓ-cis,trans-3-(2,2-dichlorovinyl)-2,2-dimethylcyclopropane (Permethrin); α-cyano-3-phenoxybenzyl 3-(2-chloro-3,3,3-trifluoroprop-1-enyl)-2,2-dimethylcyclopropanecarboxylate (Cyhalothrin), 3-(2-chloro-3,3,3-trifluoro-1-propenyl)-2,2-dimethyl, (2-methyl[1,1'-biphenyl]-3-yl)methyl ester (Bifenthrin); cyano(4-fluoro-3-phenoxyphenyl)methyl-3-(2,2-dichloroethenyl)-2,2-dimethyl-cyclopropanecarboxylate (Cyfulthrin) or (±)-cyano(3-phenoxyphenyl)methyl(+)-4-difluoromethoxy)-α-(1-methylethyl)benzeneacetate (Fulcythrinate), etc. These may be contained alone or in combination.

Next, typical examples of injurious insects to which the insecticidal compositions of this invention can be applied as insecticides are given below.

1. Lepidoptera

Apple leafminer (Phyllonorycter ringoneella), Diamondback moth (Plutella xylostella), Cotton seedworn (Promaractis inonisema), Spiny bollworm (Earias insulana), Summer fruit tortrix (Adoxophyes orana), Soybean pod borer (Leguminivora glycinivorella), Rice leafroller (Cnaphalocrosis medinalis), Rice stem borer (Chilo suppressalis), Oriental corn borer (Ostrinia furnacalis), Cabbage armyworm (Mamestra brassicae), Armyworm (Pseudaletia separata), Common cutworm (Spodoptera litura), Rice skipper (Parnara guttata),

Common white (Pieris rapae), etc.

2. Coleoptera

Cupreous chafer (Anomala cuprea), Japanese beetle (Popillia japonica), Rice weevil (Echinocnemus squameus), Rice water weevil (Lissorhoptrus oryzophilus), Rice leaf beetle (Oulema oryzae), Varied carpet beetle (Anthrenus verbasci), Cadelle (Tenebrioides mauritanicus), Twenty-eight-spotted ladybird (Henosepilachna vigintioctopunctata), Azuki bean weevil (Callosobruchus chinensis), Pine sawyer (Monochamus altanatus), Cucurbit leaf beetle (Aulacophora femorakis), etc.

3. Diptera

House mosquito (Culex pipiens), Yellow-fever mosquito (Aedes aegypti), seedcorn maggot (Hylemya platura), Housefly (Musca domestica), Melon fly (Dacus cucurbitae), Rice leafminer (Agromyza oryzae), etc.

4. Orthoptera

African mole criket (Gryllotalpa africana), Asiatic locust (Locusta migratoria), Rice grasshopper (Oxya japonica), German cockroach (Blattella germanica), Smokybrown cockroach (Periplaneta fliginosa), etc.

5. Hymenoptera

Cabbage sawfly (Athalia rosae japonensis), Azalea argid sawfly (Agres similis), etc.

6. Hemiptera

Green rice leafhopper (Nephotettix

cincticeps), Brown rice planthopper (Nilaparvata lugens), Smaller brown rice planthopper (Laodelphax striatellus), Green peach aphid (Myzus persicae), Greenhouse whitefly (Trialeurodes vaporariorum), Comstock mealybug (Pseudococcus comstocki), etc.

For applying the above-mentioned composition of this invention, it can be applied, depending on purpose of use, either after direct dilution with water, or after formulation into a form of composition, e.g., emulsifiable concentrates, wettable powders, dusts, granules, aerosols, flowable, preparations for altra-low volume application, etc. with the aid of adjuvants for agricultural compositions by a procedure generally employed in the field of preparation of agricultural compositions. In practice, these various compositions can be applied as it is directly or after dilution to a desired concentration with water.

As the adjuvants for agricultural compositions described herein, there can be exemplified inert solvents and/or carriers (diluents), various surfactants and/or organic materials, etc. The solvents include materials obtained by fractional distillation of petroleum such as kerosene, gas oil and the like; aromatic hydrocarbons such as toluene, xylene and the like; alcohols such as methylnaphthalene, cyclohexane, acetone, cyclohexanone, N-methyl-2-pyrrolidone, isophorone, methanol, butanol, glycols and the like; amides

such as dimethylformamide and the like; sulfoxides such as dimethyl sulfoxide and the like; animal and vegetable oils; fatty acids; fatty acid esters; etc.

The carriers (diluents) include clay, kaolin, talc, diatomaceous earth, silica, calcium carbonate, montmorillonite, bentonite, feldspar, quartz, alumina, etc.

The surfactants include anionic surfactants, cationic surfactants, nonionic surfactants and ampholytic surfactants, for example, higher alcohol sodium sulfates, stearyltrimethylammonium chloride, polyoxyethylene alkylphenyl ethers, laurylbetain, etc.

Further, the insecticidal effect can be surely obtained by, if necessary, properly mixing adjuvants other than carriers which are generally used in agricultural compositions, for example, spreaders, emulsifiers, wetting agents, dispersants, sticking agents, disintegrators, etc.

The insecticidal composition of this invention can contain a mixture of Compound A and each pyrethroid insecticide in a concentration in the preparation in the range from 0.5 to 95% by weight, preferably from 1.5 to 50% by weight.

The mixing proportions of Compound A and the aforesaid pyrethroid series compound are 1 part (by weight, hereinafter the same applied) of Compound A and 0.1 to 2,500 parts of the pyrethroid compound,

preferably 1 part of Compound A and 0.25 to 10 parts of the pyrethroid series compound. The using amount of the composition of this invention is 2.5 to 500 g, preferably 3 to 100 g in terms of active ingredient per 10 ares. Needless to say, the present preparation can be applied alone as it is, and it may be mixed with herbicides, plant growth regulators, fungicides (including agricultural and horticultural fungicides and soil disinfectants), soil conditioners, nematicides, synergists, repellents or mitecides, and may be applied as a mixture with fertilizers or other insecticides.

The insecticidal composition of this invention exhibits, as is evident from the following Test Examples, an excellent synergistic effect which c.. be expected from the insecticidal effect of the individual agents.

Examples

Examples of this invention are shown below. In Examples, all percents are by weight.

Preparation Example 1 (Emulsifiable concentrate)

An emulsifiable concentrate was prepared by dissolving 5% of Compound A in 30 % of DMSO, thereafter adding thereto 10% of Cycloprothrin, 45% of isophorone, and 10% of New kalgen 15152L (a mixture of polyoxyethylene alkylphenytl ether and polyoxyethylene alkyl

ether, mfd. by Takemoto Oil and Fat Co., LTD.), and dissolving the whole of them.

Preparation Example 2 (Wettable powder)

| | |
|---|---|
| Cycloprothrin | 10% |
| Compound A | 5 |
| White carbon | 10 |
| Diatomaceous earth | 25 |
| Clay | 43 |
| Demol T | 4 |
| New kalgen 405H | 3 |

A wettable powder was prepared by mixing the above composition homogeneously in a mixer, and then grinding the resulting mixture by means of a hammer mill.

Preparation Example 3 (Dust)

| | |
|---|---|
| Deltamethrin | 0.5% |
| Compound A | 0.5 |
| Driless A (an alkylphosphoric acid derivative, mfd. by Sankyo & Co., LTD.) | 1.0 |
| White carbon | 1.0 |
| Clay | 17.0 |
| DL Clay (containing 95% or more of particles of 300 meshes or more, mfd. by Showa Kogyo K.K.) | 80.0 |

A DL dust was prepared by mixing 0.5% of Deltamethrin, 0.5% of Comound A, 1.0% of Driless A, 1.0% of white carbon and 17.0% of clay homogeneously in a mixture, thereafter grinding the mixture by means of a hammer mill, adding 80% of DL clay to the mixture, and mixing them homogenously.

Preparation Example 4 (Extruded Granules)

| | |
|---|---|
| Cycloprothrin | 2.0% |
| Compound A | 0.5 |
| Detergent #60 (sodium alkylbenzenesulfonate, mfd. by Lion Co., LTD.) | 1.0 |
| Sunx P-252 (sodium lignin sulfonate, mfd. by Sanyo Kokusaku Pulp Co., LTD.) | 2.0 |
| Kunigel V-1(bentonite, mfd. by Kunimine kogyo K.K.) | 25.0 |
| Clay | 69.5 |

Granules were prepared by mixing the above ingredients homogeneously in a mixer, adding a suitable amount of water, kneading the resulting mixture, granulating the kneaded mixture by means of an extrusion granulator for a diameter of 0.8 mm, drying the resulting granules, and then sieving the same to obtain granules of 12 to 32 meshes.

Preparation Example 5 (Coated granules)

Granules were prepared by placing 96% of calcium carbonate of 16 to 32 meshes in a concrete mixer, mixing therewith 0.5% of NP10 (polyoxyethylene (10 moles) nonylphenyl ether) homogeneously with stirring, adding 0.5% of compound A, 2% of Cycloprothrin, and then 1.5% of white carbon, conducting coating, and conducting sieving to obtain granules of 16 to 32 meshes.

Preparation Example 6 (Aerosol)

An aerosol containing 300 parts by weight was prepared by dissolving 0.5% of Compound A and 0.5% of Fenvalerate in 49.0% of methyl cellosolve, packing the solution together with 50% of dimethyl ether into an aerosol can, and equipping the can with a valve only for use in an inverse position and a spray button.

Next, Test Examples showing the utility of the composition of this invention are given below.

Test Example 1

Each of the compositions of this invention and reference individual agents was diluted to a predetermined concentration with a 1/3,000 spreader (Sin(New) Gramin mfd. by Sankyo & Co., LTD.) solution, and a cabbage planted in a pot was sprayed with the resulting

dilution, air-dried, and covered with a plastic cylinder whose upper part was covered with a cheese cloth net. The pot was then placed in a room thermostated at 25°C, after which the cabbages were inoculated with 10 third-instar larvae of diamondback moth of a lineage having a lowered sensitivity to pyrethroid on the spraying day and 5 days after the spraying, and the mortality of the larvae was investigated. The test was carried out with duplicate groups. The results are shown in Table 1.

Table 1 Pot test on larvae of Diamondback moth

| Agent | Concentration of each agent (ppm) | | Mortality (%) of larvae inoculated on the spraying day | | Mortality (%) of larvae inoculated 5 days after spraying | |
|---|---|---|---|---|---|---|
| | Pyrethroid agent | Compound A | After 2 days | After 5 days | After 2 days | After 5 days |
| Cycloprothrin | 100 | None | 60 | 65 | 10 | 10 |
| Cycloprothrin + Compound A | 50 | 0.02 | 55 | 95 | 5 | 45 |
| Cypermethrin | 100 | None | 65 | 65 | 20 | 25 |
| Cypermethrin + Compound A | 50 | 0.02 | 65 | 100 | 25 | 75 |
| Fenvalerate | 100 | None | 75 | 80 | 25 | 25 |
| Fenvalerate + Compound A | 50 | 0.02 | 80 | 100 | 25 | 90 |
| Fluvalinate | 100 | None | 40 | 55 | 15 | 20 |
| Fluvalinate + Compound A | 50 | 0.02 | 60 | 95 | 10 | 55 |
| Deltamethrin | 100 | None | 70 | 70 | 35 | 35 |
| Deltamethrin + Compound A | 50 | 0.02 | 70 | 100 | 25 | 95 |
| Compound A | None | 0.04 | 0 | 55 | 0 | 60 |
| Untreated | None | None | 0 | 0 | 0 | 0 |

Test Example 2

Retained effects on Greenhouse whitefly

Potted cucumber seedlings of the 3 leaf stage were immersed in each liquid chemical of a predetermined concentration prepared by diluting the insecticidal composition of this invention or a reference single agent with a 1/3,000 spreader (Shin Gramin) solution for 10 seconds. Seven days, 14 days and 21 days after the treatment, 100 imagoes each were left free and allowed to oviposit for 2 weeks. Two weeks after the oviposition, whether the larvae are alive or dead was investigated. The test was carried out with triplicate groups. The results obtained are shown in Table 2.

Table 2 Retained effect on Greenhouse whitefly

| Agent | Concentration of each agent (ppm) | | Mortality (%) | | |
|---|---|---|---|---|---|
| | Pyrethroid agent | Compound A | 7 Days after treatment | 14 Days after treatment | 21 Days after treatment |
| Cycloprothrin | 200 | None | 81 | 33 | 7 |
| Cycloprothrin + Compound A | 100 | 20 | 100 | 98 | 76 |
| Cypermethrin | 200 | None | 92 | 65 | 12 |
| Cypermethrin + Compound A | 100 | 20 | 100 | 92 | 82 |
| Fenvalerate | 200 | None | 97 | 77 | 23 |
| Fenvalerate + Compound A | 100 | 20 | 100 | 100 | 96 |
| Fluvalinate | 200 | None | 87 | 80 | 18 |
| Fluvalinate + Compound A | 100 | 20 | 100 | 100 | 94 |
| Deltamethrin | 200 | None | 92 | 78 | 14 |
| Deltamethrin + Compound A | 100 | 20 | 100 | 100 | 89 |
| Compound A | None | 40 | 79 | 68 | 42 |
| Untreated | None | None | 0 | 0 | 0 |

Test Example 3

Controlling effect on Apple leafminer

Each liquid chemical of a predetermined concentration prepared by diluting the insecticidal composition of this invention or a reference single agent with a 1/3,000 spreader (Shin Gramin) solution was sprayed upon trees in an amount of 2.5 liters per tree by means of a power-driven sprayer on July 22. The test was carried out with triplicate groups of one tree each. Twenty new treetops per tree were marked and the number of larvae parasitic on the treetops was investigated before the spraying, 14 days after the spraying, and 28 days after the spraying. The controlling efficiency indicating the controlling effect of agent was calculated according to the following equation from the number of larvae parasitic on the treetops. The test results are shown in Table 3.

Controlling efficiency (%) =

$$\left(1 - \frac{\begin{bmatrix}\text{Number of larvae before spraying in untreated}\end{bmatrix} \times \begin{bmatrix}\text{Number of larvae after spraying in treated group}\end{bmatrix} - \begin{bmatrix}\text{Number of larvae before spraying in treated group}\end{bmatrix}}{\begin{bmatrix}\text{Number of larvae before spraying in treated group}\end{bmatrix} \times \begin{bmatrix}\text{Number of larvae after spraying in untreated group}\end{bmatrix} - \begin{bmatrix}\text{Number of larvae before spraying in untreated group}\end{bmatrix}}\right) \times 100$$

Table 3 Controlling effect on Apply leafminer

| Agent | Concentration of each agent (ppm) | | Before spraying | 14 days after spraying | | 28 Days after spraying | |
|---|---|---|---|---|---|---|---|
| | Pyrethroid agent | Compound A | Number of larvae | Number of larvae | Controlling efficiency | Number of larvae | Controlling efficiency |
| Cycloprothrin | 20 | None | 3.6 | 26.9 | 46.1 | 39.5 | 69.7 |
| Cycloprothrin + Compound A | 10 | 5 | 5.2 | 12.8 | 87.8 | 23.0 | 89.6 |
| Cypermethrin | 20 | None | 3.5 | 40.7 | 11.4 | 102.7 | 13.9 |
| Cypermethrin + Compound A | 10 | 5 | 8.6 | 31.4 | 77.9 | 32.6 | 91.5 |
| Fenvalerate | 20 | None | 3.0 | 29.9 | 25.3 | 44.3 | 58.2 |
| Fenvalerate + Compound A | 10 | 5 | 3.9 | 7.4 | 92.5 | 7.4 | 97.3 |
| Fluvalinate | 20 | None | 5.1 | 47.7 | 30.4 | 35.1 | 22.5 |
| Fluvalinate + Compound A | 10 | 5 | 6.2 | 20.9 | 81.0 | 29.5 | 88.6 |
| Deltamethrin | 20 | None | 3.3 | 38.5 | 11.1 | 83.4 | 26.2 |
| Deltamethrin + Compound A | 10 | 5 | 3.1 | 9.0 | 84.1 | 14.9 | 88.4 |
| Compound A | None | 10 | 5.6 | 25.1 | 71.0 | 65.2 | 67.7 |
| Untreated | None | None | 5.4 | 70.2 | 0 | 183.1 | 0 |

Test Example 4

Controlling effect on Spiny bollworm

Each of the insecticidal compositions of this invention and reference individual agents was diluted with a 1/3,000 spreader (Shin Gramin) solution, and the resulting dilution was sprayed upon groups of three cotton plants each at the dosage shown in Table 4 by means of a power-driven sprayer on September 5. On the day before the spraying and 7 days after the spraying, the total number of squares, flowers and balls and the total number of injured squares, flowers and balls were reckoned, and the injury rates were calculated. From the injury rates, the controlling rate indicating the controlling effect of agent was calculated according to the following equation;

Controlling efficiency (%) =

$$\left(1 - \frac{\begin{bmatrix}\text{Injury rate before}\\ \text{spraying in}\\ \text{untreated group}\end{bmatrix} \times \begin{bmatrix}\text{Injury rate after}\\ \text{spraying in}\\ \text{treated group}\end{bmatrix}}{\begin{bmatrix}\text{Injury rate before}\\ \text{spraying in}\\ \text{treated group}\end{bmatrix} \times \begin{bmatrix}\text{Injury rate after}\\ \text{spraying in}\\ \text{untreated group}\end{bmatrix}}\right) \times 100$$

Activity expected of a composition prepared by mixing two agents can be calculated as follows (see S.R. Colby "Calculated Synergistic and Competitive Reactions of Herbicidal Compositions", Weeds 15, pp 20-22 (1967)):

$$E = X + Y - (X \times Y)/100$$

wherein $X$ = controlling efficiency (%) of agent A at a dosage of q

Y = controlling efficiency (%) of agent A at a dosage of q

E = controlling efficiency (%) (expected value: calculated value) of agents A + B at a dosage of p + q.

When the actual controlling efficiency (a measured value) is larger than the calculated value, a synergistic effect participates in the activity of the composition. From Table 4, the synergistic effects of this invention are proved.

Table 4 Controlling effect on Spiny bollworm

| | Agent and dosage | | Controlling efficiency (%) | |
|---|---|---|---|---|
| | a.i.g/10a | a.i.g/10a | Found | Calculated |
| Cycloprometrin + Compound A | | | | |
| | 1.25 | 5.0 | 77 | 36 |
| | 5.0 | 5.0 | 87 | 40 |
| | 10.0 | 5.0 | 100 | 64 |
| | 50.0 | 5.0 | 100 | 91 |
| | 1.25 | | 0 | |
| | 5.0 | | 6 | |
| | 10.0 | | 43 | |
| | 50.0 | | 86 | |
| | | 5.0 | 36 | |
| Cypermethrin + Compound A | | | | |
| | 1.25 | 5.0 | 81 | 55 |
| | 2.5 | 5.0 | 93 | 65 |

- Cont'd -

Table 4 (Cont'd)

| | | | | |
|---|---|---|---|---|
| | 5.0 | 5.0 | 100 | 87 |
| | 10.0 | 5.0 | 100 | 97 |
| | 1.25 | | 29 | |
| | 2.5 | | 46 | |
| | 5.0 | | 80 | |
| | 10.0 | | 95 | |
| | | 5.0 | 36 | |
| Deltamethrin + Compound A | | | | |
| | 1.25 | 5.0 | 95 | 75 |
| | 2.5 | 5.0 | 100 | 80 |
| | 5.0 | 5.0 | 100 | 87 |
| | 1.25 | | 61 | |
| | 2.5 | | 68 | |
| | 5.0 | | 80 | |
| | | 5.0 | 36 | |
| Decamethrin + Compound A | | | | |
| | 1.25 | 2.5 | 85 | 73 |
| | 2.5 | 2.5 | 93 | 78 |
| | 5.0 | 2.5 | 100 | 86 |
| | 1.25 | | 61 | |
| | 2.5 | | 68 | |
| | 5.0 | | 80 | |
| | | 2.5 | 30 | |
| Permethrin + Compound A | | | | |
| | 1.25 | 5.0 | 63 | 42 |
| | 2.5 | 5.0 | 82 | 46 |

- Cont'd -

Table 4 (Cont'd)

| | | | | |
|---|---|---|---|---|
| | 5.0 | 5.0 | 97 | 71 |
| | 10.0 | 5.0 | 100 | 82 |
| | 50.0 | 5.0 | 100 | 88 |
| | 1.25 | | 10 | |
| | 2.5 | | 16 | |
| | 5.0 | | 54 | |
| | 10.0 | | 72 | |
| | 50.0 | | 81 | |
| | | 5.0 | 36 | |
| Cyhalothrin + Compound A | | | | |
| | 1.25 | 5.0 | 82 | 72 |
| | 5.0 | 5.0 | 100 | 85 |
| | 10.0 | 5.0 | 100 | 96 |
| | 1.25 | | 56 | |
| | 5.0 | | 77 | |
| | 10.0 | | 94 | |
| | | 5.0 | 36 | |
| Bayfenthrin + Compound A | | | | |
| | 1.25 | 5.0 | 66 | 49 |
| | 5.0 | 5.0 | 85 | 56 |
| | 10.0 | 5.0 | 100 | 83 |
| | 1.25 | | 21 | |
| | 5.0 | | 32 | |
| | 10.0 | | 73 | |
| | | 5.0 | 36 | |

- Cont'd -

Table 4 (Cont'd)

| | | | | |
|---|---|---|---|---|
| Bifenthrin + Compound A | | | | |
| | 5.0 | 2.5 | 87 | 52 |
| | 10.0 | 2.5 | 100 | 81 |
| | 25.0 | 2.5 | 100 | 91 |
| | 5.0 | | 32 | |
| | 10.0 | | 73 | |
| | 25.0 | | 87 | |
| | | 2.5 | 30 | |
| Cyfulthrin + Compound A | | | | |
| | 1.25 | 5.0 | 90 | 67 |
| | 5.0 | 5.0 | 100 | 76 |
| | 10.0 | 5.0 | 100 | 96 |
| | 1.25 | | 48 | |
| | 5.0 | | 63 | |
| | 10.0 | | 93 | |
| | | 5.0 | 36 | |
| Fulcythrinate + Compound A | | | | |
| | 1.25 | 5.0 | 88 | 49 |
| | 5.0 | 5.0 | 100 | 80 |
| | 10.0 | 5.0 | 100 | 90 |
| | 1.25 | | 21 | |
| | 5.0 | | 69 | |
| | 10.0 | | 84 | |
| | | 5.0 | 36 | |
| Fulcythrinate + Compound A | | | | |
| | 5.0 | 2.5 | 96 | 78 |
| | 10.0 | 2.5 | 100 | 89 |

- Cont'd -

Table 4 (Cont'd)

| | | | |
|---|---|---|---|
| 25.0 | 2.5 | 100 | 93 |
| 5.0 | | 69 | |
| 10.0 | | 84 | |
| 25.0 | | 90 | |
| | 2.5 | 30 | |

Test Example 5

Controlling effect of insecticide-resistant Diamond-back moth

In an area of breeding of diamondback moth having a developed resitance to insecticides, cabbage seedlings were transplanted on April 6. Each of the insecticidal compositions of this invention and reference individual agents was diluted with a 1/3,000 spreader (Shin Gramin) solution and the resulting dilution was sparyed on the cabbage plants in an amount of 1 liter per group of 20 cabbage seedlings each by means of a power-driven sprayer on April 18. On the day before the spraying and 7 days after the spraying, the total number of larvae was reckoned. From the average number of larvae of triplicate groups, the controlling efficiency indicating the controlling effect of agent was calculated according to the equation:

Controlling efficiency (%) =

$$\left(1 - \frac{\begin{bmatrix}\text{Number of larvae}\\ \text{before spraying in}\\ \text{untreated group}\end{bmatrix} \times \begin{bmatrix}\text{Number of larvae}\\ \text{after spraying in}\\ \text{treated group}\end{bmatrix}}{\begin{bmatrix}\text{Number of larvae}\\ \text{before spraying in}\\ \text{treated group}\end{bmatrix} \times \begin{bmatrix}\text{Number of larvae}\\ \text{after spraying in}\\ \text{untreated group}\end{bmatrix}}\right) \times 100$$

Table 5 Controlling effect of insecticides-resistant diamondback moth

| | Agent and dosage | | Controlling efficiency (%) | |
|---|---|---|---|---|
| | ppm | ppm | Found | Calculated |
| Cycloprothrin + Compound A | | | | |
| | 12.5 | 5.0 | 91 | 76 |
| | 50.0 | 50.0 | 100 | 76 |
| | 100.0 | 50.0 | 100 | 83 |
| | 500.0 | 50.0 | 100 | 83 |
| | 12.5 | | 0 | |
| | 50.0 | | 0 | |
| | 100.0 | | 29 | |
| | 500.0 | | 31 | |
| | | 50.0 | 76 | |
| Cypermethrin + Compound A | | | | |
| | 12.5 | 50.0 | 100 | 76 |
| | 25.0 | 50.0 | 100 | 78 |
| | 50.0 | 50.0 | 100 | 88 |
| | 100.0 | 50.0 | 100 | 88 |
| | 12.5 | | 0 | |
| | 25.0 | | 10 | |
| | 50.0 | | 50 | |
| | 100.0 | | 50 | |
| | | 50.0 | 76 | |
| Deltamethrin + Compound A | | | | |
| | 12.5 | 50.0 | 100 | 81 |
| | 25.0 | 50.0 | 100 | 83 |

- Cont'd -

Table 5 (Cont'd)

| | | | | |
|---|---|---|---|---|
| | 50.0 | 50.0 | 100 | 89 |
| | 12.5 | | 21 | |
| | 25.0 | | 31 | |
| | 50.0 | | 54 | |
| | | 50.0 | 76 | |
| Deltamethrin + Compound A | | | | |
| | 12.5 | 25.0 | 93 | 75 |
| | 25.0 | 25.0 | 100 | 78 |
| | 50.0 | 25.0 | 100 | 85 |
| | 12.5 | | 21 | |
| | 25.0 | | 31 | |
| | 50.0 | | 54 | |
| | | 25.0 | 68 | |
| Permethrin + Compound A | | | | |
| | 12.5 | 50.0 | 87 | 76 |
| | 25.0 | 50.0 | 91 | 76 |
| | 50.0 | 50.0 | 100 | 78 |
| | 100.0 | 50.0 | 100 | 83 |
| | 500.0 | 50.0 | 100 | 85 |
| | 12.5 | | 0 | |
| | 25.0 | | 0 | |
| | 50.0 | | 10 | |
| | 100.0 | | 31 | |
| | 500.0 | | 38 | |
| | | 50.0 | 76 | |

- Cont'd -

Table 5 (Cont'd)

| | | | | |
|---|---|---|---|---|
| Cyhalothrin + Compound A | | | | |
| | 12.5 | 50.0 | 100 | 80 |
| | 50.0 | 50.0 | 100 | 86 |
| | 100.0 | 50.0 | 100 | 87 |
| | 12.5 | | 17 | |
| | 50.0 | | 40 | |
| | 100.0 | | 46 | |
| | | 50.0 | 76 | |
| Bifenthrin + Compound A | | | | |
| | 12.5 | 50.0 | 100 | 77 |
| | 50.0 | 50.0 | 100 | 81 |
| | 100.0 | 50.0 | 100 | 82 |
| | 12.5 | | 5 | |
| | 50.0 | | 21 | |
| | 100.0 | | 25 | |
| | | 50.0 | 76 | |
| Bifenthrin + Compound A | | | | |
| | 50.0 | 25.0 | 87 | 75 |
| | 100.0 | 25.0 | 100 | 76 |
| | 250.0 | 25.0 | 100 | 85 |
| | 50.0 | | 21 | |
| | 100.0 | | 25 | |
| | 250.0 | | 52 | |
| | | 25.0 | 68 | |

- Cont'd -

Table 5 (Cont'd)

| | | | |
|---|---|---|---|
| Cyfulthrin + Compuond A | | | |
| 12.5 | 50.0 | 100 | 80 |
| 50.0 | 50.0 | 100 | 81 |
| 100.0 | 50.0 | 100 | 87 |
| 12.5 | | 18 | |
| 50.0 | | 22 | |
| 100.0 | | 46 | |
| | 50.0 | 76 | |
| Fulcythrinate + Compound A | | | |
| 12.5 | 50.0 | 100 | 78 |
| 50.0 | 50.0 | 100 | 81 |
| 100.0 | 50.0 | 100 | 82 |
| 12.5 | | 8 | |
| 50.0 | | 19 | |
| 100.0 | | 27 | |
| | 50.0 | 76 | |
| Fulcythrinate + Compound A | | | |
| 50.0 | 25.0 | 93 | 74 |
| 100.0 | 25.0 | 100 | 77 |
| 250.0 | 25.0 | 100 | 80 |
| 50.0 | | 19 | |
| 100.0 | | 27 | |
| 250.0 | | 38 | |
| | 25.0 | 68 | |

Claims

1. An insecticidal composition characterized by comprising a mixture of a pyrethroid insecticide and N-(4-bromo-2-fluoro-5-trifluoromethylphenyl)-N'-(2,6-difluorobenzoyl)urea.

2. An insecticidal composition according to Claim 1, wherein the pyrethroid insecticide is any one compound selected from the group consisting of at least α-cyano-3-phenoxybenzyl 1-(p-ethoxyphenyl)-2,2-dichloro-cyclopropanecarboxylate; (RS)-α-cyano-3-phenoxybenzyl (IRS)cis,trans-3-(2,2-dichlorovinyl)-2,2-dimethy-cyclo propanecarboxylate; α-cyano-3-phenoxybenzyl α-isopropyl-4-chlorophenylacetate; α-cyano-3-phenoxybenzyl (IRS)-2-(2-chloro-4-trifluoromethylphenyl)amino-3-methylbutylate; α-cyano-3-phenoxybenzyl (IRS)cis-3-(2,2-dibromovinyl)-2,2-dimethylcyclopropanecarboxylate; 3-phenoxybenzyl-d,ℓ-cis,trans-3-(2,2-dichlorovinyl)-2,2-dimethylcyclo propane; -cyano-3-phenoxybenzyl 3-(2-chloro-3,3,3-trifluoroprop-1-enyl)-2,2-dimethylcyclopropanecarboxylate; 3-(2-chloro-3,3,3-trifluoro-1-propenyl)-2,2-dimethyl-, (2-methyl[1,1'-biphenyl]-3-yl)methyl ester; and cyano(4-fluoro-3-phenoxyphenyl)methyl-3-(2,2-dichloroethenyl)-2,2-dimethyl-cyclopropanecarboxylate or (±)-cyano(3-phenoxyphenyl)methyl(+)-4-difluoromethoxy)-α-(1-methyl-ethyl)benzeneacetate.

3. An insecticidal composition according to Claim 1 or 2, wherein the pyrethroid compound is mixed in a

proportion of 0.1 to 2,500 parts by weight per part by weight of N-(4-bromo-2-fluoro-5-trifluoromethylphenyl)-N'-(2,6-difluorobenzoyl)urea.

4. An insecticidal composition according to Claim 3, wherein the proportion of the pyrethroid compound is 0.25 to 10 parts by weight.

0246331

# INTERNATIONAL SEARCH REPORT

International Application No PCT/JP86/00573

**I. CLASSIFICATION OF SUBJECT MATTER** (if several classification symbols apply, indicate all)[1]

According to International Patent Classification (IPC) or to both National Classification and IPC

Int.Cl$^4$ A01N53/00, 47/34, 37/34

**II. FIELDS SEARCHED**

Minimum Documentation Searched[4]

| Classification System | Classification Symbols |
|---|---|
| IPC | A01N53/00, 47/34, 37/34 |

Documentation Searched other than Minimum Documentation to the Extent that such Documents are Included in the Fields Searched[5]

**III. DOCUMENTS CONSIDERED TO BE RELEVANT**[14]

| Category* | Citation of Document,[16] with indication, where appropriate, of the relevant passages[17] | Relevant to Claim No[18] |
|---|---|---|
| P | JP, A, 61-148157 (Nippon Kayaku Kabushiki Kaisha) 5 July 1986 (05. 07. 86) Claim, page 3, lower left column, lines 1 to 5 & DE, A, 3544501 | 1-4 |
| Y | JP, A, 50-64422 (Sumitomo Chemical Co., Ltd.) 31 May 1975 (31. 05. 75) Claim, (Family: none) | 1-4 |
| Y | JP, A, 50-58237 (Sumitomo Chemical Co., Ltd.) 21 May 1975 (21. 05. 75) Claim, (Family: none) | 1-4 |
| Y | JP, A, 51-32728 (Sumitomo Chemical Co., Ltd.) 19 March 1976 (19. 03. 76) Claim, (Family: none) | 1-4 |

* Special categories of cited documents:[15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search[2] | Date of Mailing of this International Search Report[2] |
|---|---|
| January 14, 1987 (14. 01. 87) | January 26, 1987 (26. 01. 87) |
| International Searching Authority[1] | Signature of Authorized Officer[20] |
| Japanese Patent Office | |

BAD ORIGINAL

International Application No. PCT/JP86/00573

**FURTHER INFORMATION CONTINUED FROM THE SECOND SHEET**

| | | |
|---|---|---|
| Y | JP, A, 55-22635 (Katsuta Sumio) 18 February 1980 (18. 02. 80) Claim, (Family: none) | 1-4 |
| Y | JP, A, 55-160706 (Sumitomo Chemical Co., Ltd., one other) 13 December 1980 (13. 12. 80) Claim, (Family: none) | 1-4 |
| Y | JP, A, 58-216105 (Takeda Chemical Industries, Ltd.) 15 December 1983 (15. 12. 83) Claim, (Family: none) | 1-4 |

**V. ☐ OBSERVATIONS WHERE CERTAIN CLAIMS WERE FOUND UNSEARCHABLE [10]**

This international search report has not been established in respect of certain claims under Article 17(2) (a) for the following reasons:[11]

1 ☐ Claim numbers............because they relate to subject matter [12] not required to be searched by this Authority, namely:

2 ☐ Claim numbers............because they relate to parts of the international application that do not comply with the prescribed requirements to such an extent that no meaningful international search can be carried out [13], specifically:

**VI. ☐ OBSERVATIONS WHERE UNITY OF INVENTION IS LACKING [11]**

This International Searching Authority found multiple inventions in this international application as follows:

1 ☐ As all required additional search fees were timely paid by the applicant, this international search report covers all searchable claims of the international application.

2 ☐ As only some of the required additional search fees were timely paid by the applicant, this international search report covers only those claims of the international application for which fees were paid, specifically claims:

3 ☐ No required additional search fees were timely paid by the applicant. Consequently, this international search report is restricted to the invention first mentioned in the claims; it is covered by claim numbers:

4 ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP86/00573

**FURTHER INFORMATION CONTINUED FROM THE SECOND SHEET**

| | | |
|---|---|---|
| Y | JP, A, 53-121731 (Zoecon Corporation) 24 October 1973 (24. 10. 73) Claim, page 4, lower right column, line 15 to page 5, upper left column, line 3 & US, A, 4231953 & US, A, 4243819 & US, A, 4411912 & FR, A, 2392959 & FR, A, 2405922 | 1-4 |

**V.☐ OBSERVATIONS WHERE CERTAIN CLAIMS WERE FOUND UNSEARCHABLE[10]**

This international search report has not been established in respect of certain claims under Article 17(2) (a) for the following reasons:

1.☐ Claim numbers............, because they relate to subject matter[12] not required to be searched by this Authority, namely:

2.☐ Claim numbers............, because they relate to parts of the international application that do not comply with the prescribed requirements to such an extent that no meaningful international search can be carried out[13], specifically:

**VI.☐ OBSERVATIONS WHERE UNITY OF INVENTION IS LACKING[11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.